# EUROPEAN PATENT SPECIFICATION

(11) **EP 0 528 059 B1**
(45) Date of publication and mention of the grant of the patent: **01.02.1995**
(21) Application number: 91113477.3
(22) Date of filing: 12.08.1991
(51) Int. Cl.: D06N 7/00, B05D 5/06

(54) **A method for producing grain effects and the like on coverings, particularly of rubber or of synthetic or of artificial materials**
Verfahren zur Erzeugung von Korneffekten oder ähnlichem auf Belägen bestehend aus insbesondere Gummi oder synthetischen oder künstlichen Materialien
Méthode pour la production d'effets de grain sur des revêtements particulièrement à base de caoutchouc ou de matériaux synthétiques ou artificiels

(43) Date of publication of application: 24.02.1993
(73) Proprietor: MONDO S.p.A., I-10121 Torino (IT)
(72) Inventor: Stroppiana, Fernando, I-12060 Gallo d'Alba (Cuneo) (IT)
(74) Representative: Bosotti, Luciano

(56) References cited:
- GB-A- 937 266
- US-A- 2 775 994
- US-A- 3 383 442

## Description

The present invention relates in general to coverings with grain effects and the like (for example, marbling or veining) and has been developed with particular attention to its possible use in the field of coverings of rubber or of synthetic or artificial materials usable, for example, as floor coverings.

In this field, it is current practice to produce sheet coverings of rubber, polyvinyl chloride or other thermoplastic or thermosetting materials which have undergone an operation to give them a marbled or veined effect by producing more or less regular, sharp or blurred marks and lines on the covering material to create an effect more or less comparable to that of the veining of marble or wood.

The coverings are usually formed by the calendering of an extruded mass produced from materials of different colours. A marbling effect oriented substantially in the direction of the calendering operation is thus obtained. In practice, this means that the marks and lines characteristic of this effect may be longer or shorter, and more or less close together, but are always oriented in a predominant direction which is that in which the calendering operation takes place. Moreover, it is known, for example, in the production of linoleum, to divide the material output from the calendering operation into thin longitudinal strips whilst it is still plastic and to rearrange the strips transverse the length of the sheet and then subject the whole to a further calendering operation.

This method is rather complex and does not eliminate the problem indicated above since it simply achieves a different orientation of the predominant direction of the grain.

Another solution sometimes used is to incorporate granules of various shapes, consistencies and colours directly into the mixture used to form the covering sheet. More precisely, the sheet is produced by a calendering operation followed by a surface-finishing of the calendered sheet in order to produce a pattern or effect represented by the granules on the surface.

Finally, another solution is to form granules or small cubes of various shapes and colours and then deposit them on a substrate and subject the composite thus produced to a pressing operation to produce a final product with an appearance approximately similar to that of a grained covering. Such a technique is known, e.g. from US-A-2 775 994.

For various reasons, this technique is quite complex to carry out.

In the first place, the distribution of the granules has to be regulated very precisely in order to produce a uniform final product.

In the second place, the air in the spaces between the granules has to be eliminated during the pressing without giving rise to residual porosity which could promote the accumulation of dirt on the covering and make it more difficult to clean.

Moreover, particularly with intrinsically plastic materials (e.g. rubber), it is very difficult to produce the granules, except by fairly sophisticated processes (for example, the formation of small cubes in a cooled environment). Furthermore, once they have been granulated, these materials have an intrinsic tendency to clump which makes their deposition even more difficult.

Finally, the aesthetic effect achieved cannot be said to be wholly satisfactory, since the grain pattern is constituted essentially by separate areas of different colours without the gradual colour changes, blurring or mixing achieved in some natural grains.

The particular object of the present invention is to provide means for producing coverings with grain effects and the like (for example marbling or veining) which are substantially free of directional characteristics and the other defects mentioned above, all by means of an intrinsically simple operation which does not require substantial modification of the equipment and devices already in use for producing covering sheets.

According to the present invention, this object is achieved by virtue of a method having the characteristics recited in claim 1.

The invention will now be described, purely by way of non-limiting example, with reference to the appended drawings, in which:
Figure 1 is a schematic, side elevational view of the structure of a device for producing sheet coverings according to the invention,
Figure 2 is a section taken on the line II-II of Figure 1, on an enlarged scale,
Figure 3 is a section taken on the line III-III of Figure 2, on an enlarged scale, and
Figures 4 and 5 show the characteristics of two covering sheets at two successive stages of the method according to the invention.

In the drawing, a device for treating calendered sheet materials is generally indicated 1 and may, to advantage, be connected, as an output stage, to a calendering line (of known type, not shown in the drawings) for the continuous or substantially continuous production of a sheet of covering material A which is intended to be used as the starting material for the method according to the invention.

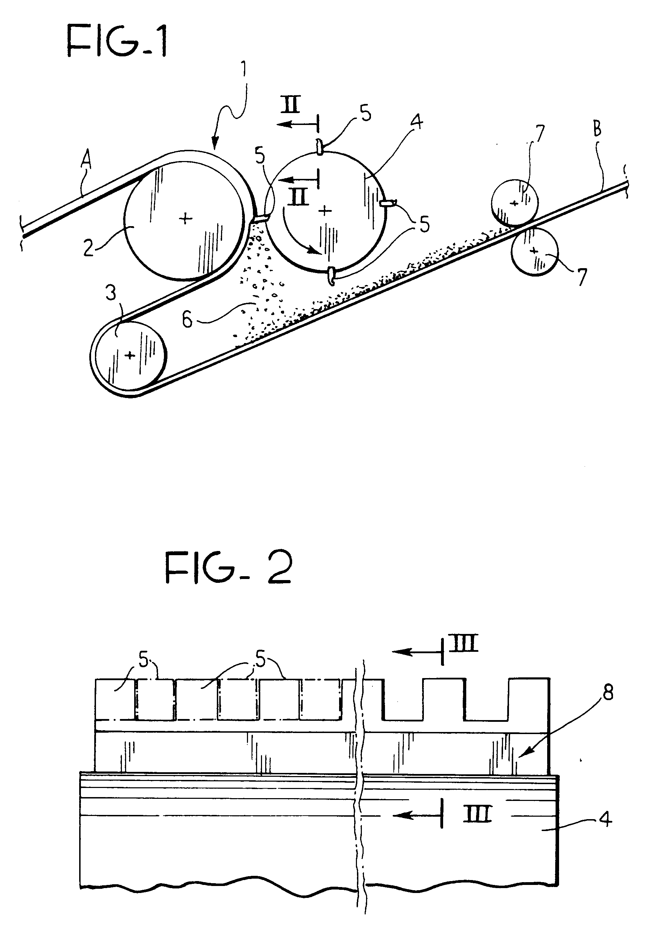

The starting sheet A preferably, but not strictly necessarily, already has marbling or veining produced by a known technique. The marbling or veining of a sheet of this type thus extends generally longitudinally, that is, in the direction in which the calendering operation by which it is produced takes place. An example of the surface appearance of such a sheet A is shown in Figure 1.

The sheet A passes (downwardly in the embodiment shown) around a first roller, indicated 2, with a horizontal axis so as to be directed towards a further, return roller 3 also with a horizontal axis.

A further roller 4 with a horizontal axis, opposite the first roller 2, has tooth-like formations which, in general, have cutting edges and are of a length (measured radially of the roller 4 and in relation to the thickness of the sheet A and the distance apart of the surfaces of the rollers 2 and 4) such that the formations 5 can penetrate the sheet A slightly so as to achieve a distinct scraping (milling) effect thereon.

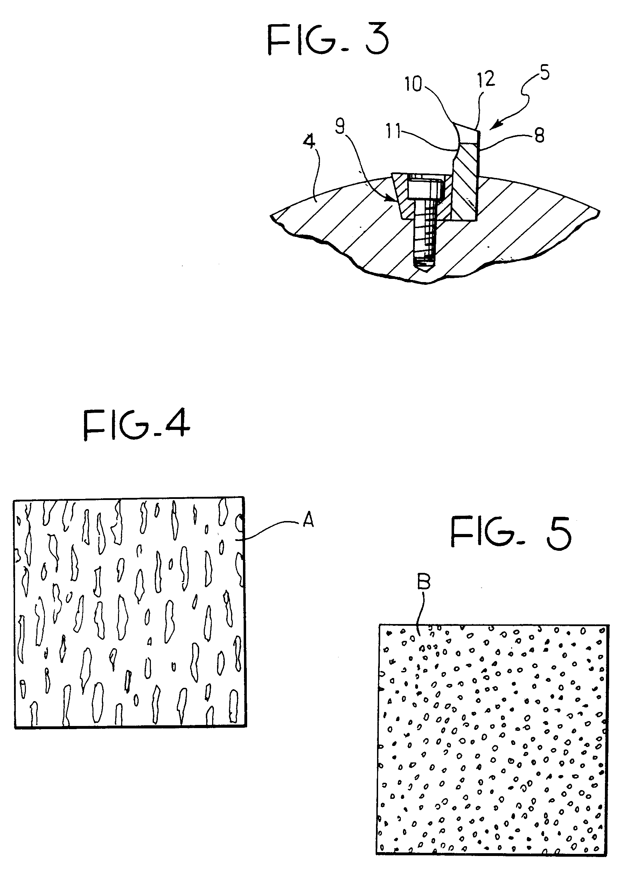

For example, as shown in Figures 2 and 3, the teeth 5 may be grouped on a plurality of straight blades 8 (for example, four blades) disposed in respective recesses 9 spaced uniformly around the periphery of the roller 4 and extending along respective generatrices thereof. The blades 8 are generally crenellated, so to speak, the teeth 5 constituting the crenellations.

In particular, as shown schematically in broken outline in Figure 2, the teeth 5 of two successive blades 8 are offset so that the teeth of a given blade act on regions of the sheet A which are not affected by the action of the teeth of the blade immediately upstream.

The teeth 5 may be mounted in various ways, however, according to techniques used, for example, in rotary mills, planing machines, etc.

The profiles of the teeth 5 (in a plane transverse the axis of the roller 4) usually have a front cutting edge 10 which is intended to act on the sheet A, with a frontal undercut surface 11 (of cylindrical profile) and a dorsal undercut surface 12, respectively. The shapes of the undercut surfaces 11 and 12, as well as the width of the tooth 5 (axially of the drum 4), may be varied selectively, however, in dependence on the final result to be achieved, particularly as regards its aesthetic appearance.

The senses (and speeds) of rotation of the rollers 2 and 4 are selected so that the formations 5 effectively move relative to the sheet A so as to form and remove therefrom shavings 6 which fall freely onto the underlying pass of the sheet A against which they are then compressed. After it has passed around the return roller 3, the sheet A advances further substantially in the direction in which it advanced into the device 1 and continues towards a pair of further, contrarotating rollers 7 arranged above and below the sheet respectively, or towards a continuous vulcanising (rotocure) unit, so that the shavings 6 are compressed or pressed against the surface of the sheet A which was scraped or milled by the teeth 5.

For this purpose (that is, in order to facilitate the incorporation of the shavings 6 into the sheet), the rollers 7 may, to advantage, be heated so as at least partially to melt the shavings 6 which are thus anchored firmly to the body of the sheet. The surface of the sheet B output by the pair of pressing rollers 7 (or the rotocure unit) thus has a grain effect more or less comparable to that shown in Figure 5.

This effect is achieved essentially as a result of the shavings 6 falling freely and consequently being reincorporated into the sheet. This produces an overall grain effect which, unlike that of the starting sheet A, has no directional characteristics or appearance longitudinally of the sheet.

The fact that the shavings 6 which have just been formed fall freely in order to be compressed against the underlying sheet ensures completely uniform distribution without the need for complex metering operations.

In the second place, the shavings can be produced easily by scraping (milling) even from very plastic materials (e.g. rubber), even when operating at ambient temperature. Their immediate deposition on the underlying sheet creates neither storage and accumulation problems nor the consequent risks of clumping.

Moreover, the shavings 6 produced by scraping are quite thin (of the order of tenths of a millimeter), and hence extremely flexible, and can consequently be compressed very easily without the risk of trapping quantities of air.

Finally, the final aesthetic effect is that of a grain with many colour-change effects and much blurring and mixing of different colours.

Furthermore, it should be noted that, although it is preferred, the solution of reincorporating the shavings 6 scraped or milled from the sheet A into the sheet from which they were formed is not strictly essential in order put the invention into practice. In fact, one could consider a solution in which the shavings 6 produced by scraping or milling are deposited on a different substrate in order to produce the desired final result.

As already stated, the final characteristics of the grain of the sheet B (that is, essentially, the lengths, orientations, shapes and characteristics of the marks or lines which give rise to the grain effect) depend on the shapes of the shavings 6 produced by the teeth 5. This shape depends in turn on a series of factors, amongst which may be mentioned:
- the shapes of the teeth 5,
- the dimensions of the teeth,
- the distribution thereof (their so-called density) on the external surface of the roller 4,
- the speed at which the scraping operation is carried out, and
- the depths of the incisions.

In the embodiment to which Figure 1 relates the starting sheet A which passes around the roller 2 advances at a linear velocity (that is, a velocity tangential to the roller 2) of the order of 0.6 m/minute. The sense of rotation of the roller 2, which, from the viewpoint of Figure 1, is clockwise, is such that the starting sheet A advances from left to right.

The roller 4, however, is rotated anticlockwise (by a respective motor, not shown) at a speed such that the teeth 5 have a linear velocity (tangential to the roller 4) of the order of 100 m/minute and hence substantially faster than the speed of advance of the sheet A.

In an embodiment which has been found particularly advantageous, the teeth 5 penetrate the sheet A to a depth of the order of 1 mm (for example, 0.6-1.2 mm).

In tests carried out by the Applicant, sheets such as linoleum sheets 2-2.5 and 3.2 mm thick were used as the starting sheet A and already had marbling or veining such as that shown in Figure 4.

The teeth 5 used had front cutting edges 10 about 4 mm long (with the teeth 6 mm apart) axially of the roller 4. The tools 5 were distributed on the roller 4 on four blades 8 angularly spaced 90^{o} apart around its periphery.

## Claims

1. A method of forming a covering with grain effect and the like, comprising the steps of:
- providing a starting material (A) for the covering,
- subjecting the starting material (A) to a scraping operation (5) resulting in the formation of shavings (6), whereas, after the scraping operation (5), the starting material (A) constitutes a substrate which is intended to form the body of the covering (B),
- collecting the shavings (6) as they fall freely from the scraping operation (5) and subjecting them to a compression operation (7) against one said substrate so as to produce a covering with the grain effect, wherein at least one of the starting material (A) and the covering (B) is in sheet form.

2. A method according to Claim 1, characterised in that the starting material (A) has a surface which is intended to be subjected to the scraping operation (5), the surface having a grain effect.

3. A method according to any one of the preceding claims, characterised in that the scraping operation is carried out by cutting tools such as teeth (5).

4. A method according to Claim 3, characterised in that the scraping operaton is carried out by means of tools (5) in rotary motion (4).

5. A method according to any one of the preceding claims, characterised in that the compression operation (7) is carried out with the application of heat to the shavings (6).

6. A method according to any one of the preceding claims, characterised in that the starting material (A) is selected from the group constituted by rubber, synthetic materials and artificial materials.

7. A method according to Claim 6, characterised in that the starting material is linoleum.

## Patentansprüche

1. Verfahren zur Herstellung eines Belages mit Korneffekt und ähnlichem, umfassend die Schritte: Bereitstellen eines Ausgangsmaterials (A) für den Belag,
Bearbeiten des Ausgangsmaterials (A) in einem Schabvorgang (5), bei dem Schnipsel (6) entstehen, wobei das Ausgangsmaterial (A) nach dem Schabvorgang (5) ein Substrat ergibt, welches für den Körper des Belages (B) vorgesehen ist,
Sammeln der beim Schabvorgang (5) frei fallenden Schnipsel (6) und Pressen derselben gegen das genannte Substrat in einem Pressvorgang (7), um einen Belag mit Korneffekt zu erzeugen, wobei zumindest das Ausgangsmaterial (A) oder der Belag (B) die Form einer dünnen Platte aufweist.

2. Verfahren nach Anspruch 1, dadurch gekennzeichnet, daß das Ausgangsmaterial (A) eine dem Schabvorgang (5) zu unterwerfende Oberfläche hat, die einen Korneffekt aufweist.

3. Verfahren nach einem der vorhergehenden Ansprüche, dadurch gekennzeichnet, daß der Schabvorgang mit Hilfe von Schneidwerkzeugen, wie zum Beispiel Zähnen (5), erfolgt.

4. Verfahren nach Anspruch 3, dadurch gekennzeichnet, daß der Schabvorgang mit Hilfe von rotierenden (4) Werkzeugen (5) erfolgt.

5. Verfahren nach einem der vorhergehenden Ansprüche, dadurch gekennzeichnet, daß der Pressvorgang (7) unter Einwirkung von Wärme auf die Schnipsel (6) erfolgt.

6. Verfahren nach einem der vorhergehenden Ansprüche, dadurch gekennzeichnet, daß das Ausgangsmaterial (A) aus einer Gruppe, die Gummi, synthetische Materialien und künstliche Materialien umfaßt, ausgewählt wird.

7. Verfahren nach Anspruch 6, dadurch gekennzeichnet, daß das Ausgangsmaterial Linoleum ist.

## Revendications

1. Procédé d'élaboration d'un revêtement avec un effet de grain ou équivalent comprenant les étapes de :
- fournir un matériau de départ (A) pour le revêtement,
- soumettre le matériau de départ (A) à une opération de grattage (5) d'où résulte la formation de copeaux (6), de telle sorte que, après l'opération de grattage (5), le matériau de départ (A) constitue un substrat qui est destiné à former le corps du revêtement (B),
- rassembler les copeaux (6) lorsqu'ils tombent librement depuis l'opération de grattage (5) et les soumettre à une opération de compression (7) contre ledit substrat de manière à produire un revêtement avec un effet de grain, dans lequel au moins un du matériau de départ (A) et du revêtement (B) est sous la forme d'une feuille.

2. Procédé selon la revendication 1, caractérisé en ce que le matériau de départ (A) a une surface qui est destinée à être soumise à une opération de grattage (5), la surface ayant un effet de grain.

3. Procédé selon l'une quelconque des revendications précédentes, caractérisé en ce que l'opération de grattage est réalisée par des outils de coupe tels que des dents (5).

4. Procédé selon la revendication 3, caractérisé en ce que l'opération de grattage est réalisée au moyen d'outils (5) en mouvement de rotation (4).

5. Procédé selon l'une quelconque des revendications précédentes, caractérisé en ce que l'opération de compression (7) est réalisée avec application de chaleur sur les copeaux (6).

6. Procédé selon l'une quelconque des revendications précédentes, caractérisé en ce que le matériau de départ (A) est sélectionné dans le groupe formé par du caoutchouc, des matériaux synthétiques et des matériaux artificiels.

7. Procédé selon la revendication 6, caractérisé en ce que le matériau de départ est du linoléum.
